# EUROPEAN PATENT SPECIFICATION

(11) **EP 1 189 530 B1**
(45) Date of publication and mention of the grant of the patent: **06.10.2004**
(21) Application number: 00941970.6
(22) Date of filing: 18.05.2000
(51) Int. Cl.: A47J 37/07

(54) **A PORTABLE COOKING AND/OR HEATING APPARATUS**
EIN TRAGBARES KOCH- UND/ODER WÄRMEGERÄT
APPAREIL PORTATIF DE CUISSON ET/OU CHAUFFANT

(30) Priority: 18.05.1999 GB 9911407
(43) Date of publication of application: 27.03.2002
(73) Proprietor: McGurgan, Martin, Omagh BT79 0NB (GB)
(72) Inventor: McGurgan, Martin, Omagh BT79 0NB (GB)
(86) International application number: PCT/EP2000/004609
(87) International publication number: WO 2000/069317

(56) References cited:
- DD-A- 233 487
- FR-A- 2 515 024
- US-A- 4 481 408

## Description

The present invention relates to a portable cooking and/or heating apparatus for outdoor or indoor use. The apparatus is particularly suited for use as a solid fuel outdoor cooking apparatus.

According to the present invention there is provided an apparatus comprising an oven chamber for roasting or baking food therein; a fuel chamber located, in use, above the oven-chamber and defining a mouth portion disposed remote from the oven chamber, the mouth portion being adapted for grilling food thereon; and first partition means between the oven chamber and the fuel chamber, the first partition-means being a plate having at least one aperture to allow air to flow between the fuel chamber and the oven chamber.

Preferably, the plate is substantially convex in shape.

Preferably, the plate includes a plurality of apertures provided therein.

Preferably, the plate has at least one circumferentially disposed channel formed therein.

Preferably, the plate has four substantially equally spaced circumferentially disposed channels formed therein.

Preferably, the apparatus has an end portion oppositely disposed, in use, under the oven chamber, the end portion being adjustably coupled to a support frame and operable between a closed state, in which the end portion forms a substantially air-tight seal with the support frame, and at least one open state in which air from the surrounding environment is able to flow into the apparatus.

More preferably, a second partition means is provided between the oven chamber and the end portion, the second partition means being oppositely disposed on the oven chamber with respect to the first partition means and comprises at least one aperture such that, when the end portion is in the at least one open state, air is able to flow through the oven chamber via the first and second partition means.

Further preferably, the end portion is coupled to the support frame via at least one cam member and corresponding cam follower which enable axial movement of the end portion with respect to the support frame upon relative rotation of the end portion and the support frame.

An embodiment of the invention will now be described with reference to the accompanying drawings, in which:
Figure 1 is a front elevation of a cooking apparatus according to the present invention;
Figure 2 is a side elevation of the apparatus of Figure 1;
Figure 3 is an exploded longitudinal sectioned view of Figure 2;
Figure 4 is a plan view of a support frame incorporated within the apparatus;
Figure 5 is a longitudinal sectioned elevation of Figure 4;
Figure 6 is a elevation of an end portion of the apparatus;
Figure 7 is a plan view of a grill plate;
Figure 8 is a sectional elevation of the grill plate of Figure 7;
Figure 9 is a plan view of a first partition means;
Figure 10 is a sectioned side elevation of the first partition means of Figure 9; and
Figure 11 is a cut-away perspective view of the plate of Figures 9 and 10.

Referring now to the drawings, there is shown, generally indicated at 10, a portable cooking apparatus according to the invention.

The apparatus 10 comprises a body 12, preferably formed from cast iron. The body 12 is shaped to define an oven chamber 14 and a fuel chamber 16. The oven chamber 14 and the fuel chamber 16 are separated by first partition means in the form of a first partition plate 18 mounted within the body 12.

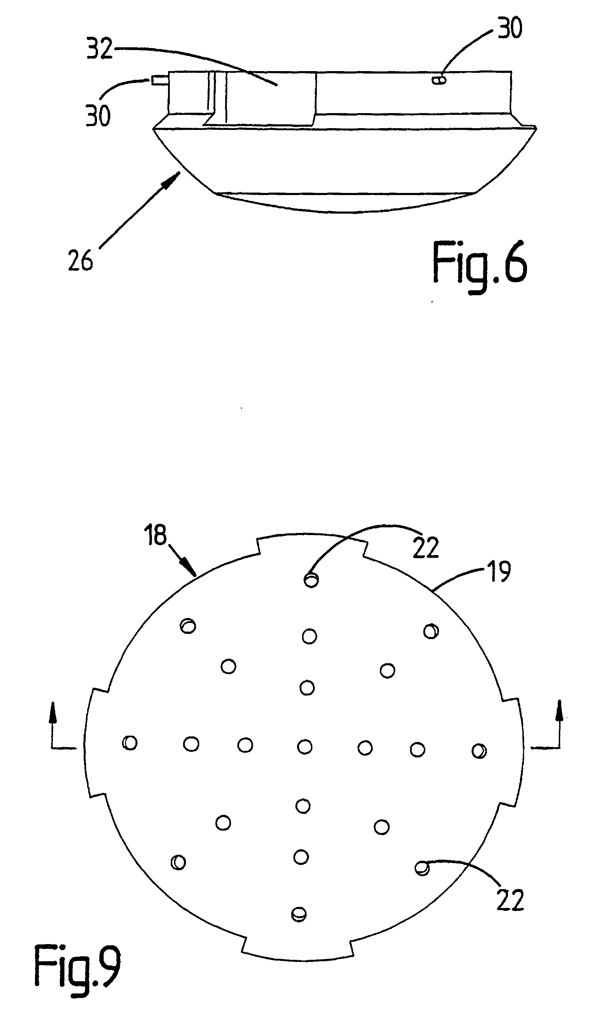

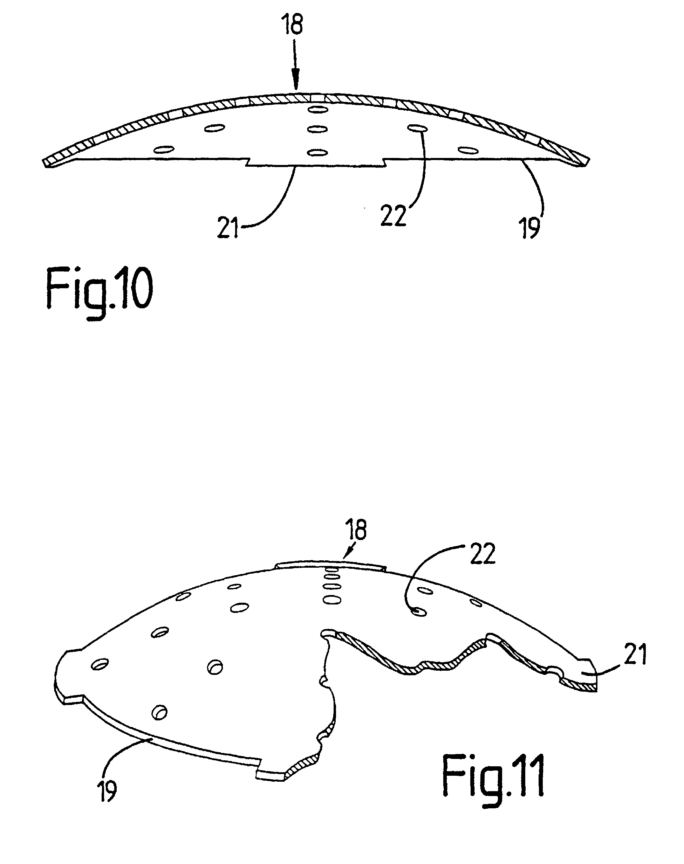

Referring now to Figures 9 to 11, the plate 18 is substantially dish-like in form, the plate 18 being oriented, in use, such as to be substantially convex in form. The plate 18 includes a plurality of radially symmetrically disposed apertures 22 provided therein. It will, of course, be appreciated that the apertures 22 need not be radially symmetrically disposed. The plate 18 also includes four substantially equally spaced, circumferentially disposed channels 19 formed therein. There may be more, or less, than four channels 19. Equally, the channels may not be substantially equally spaced about the circumference of the plate 18. The apertures 22 and channels 19 permit air and other matter to flow or pass between the oven chamber 14 and the fuel chamber 16.

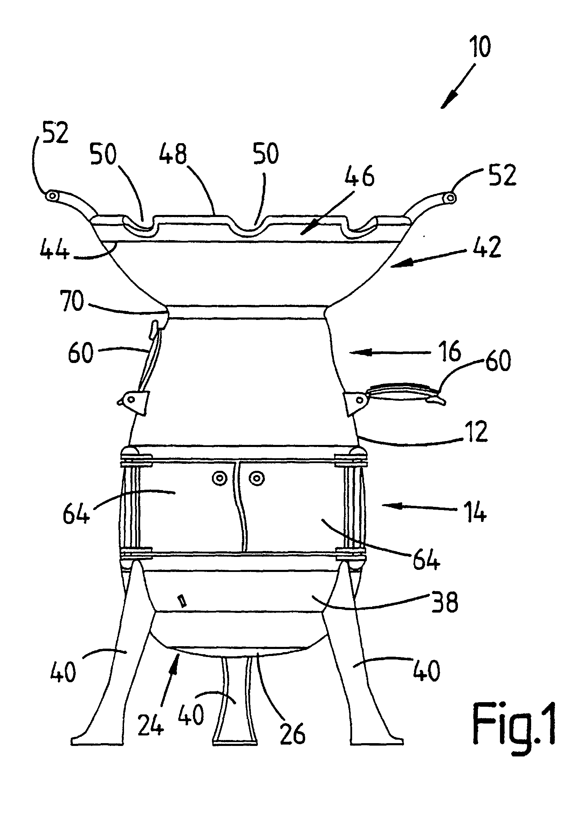

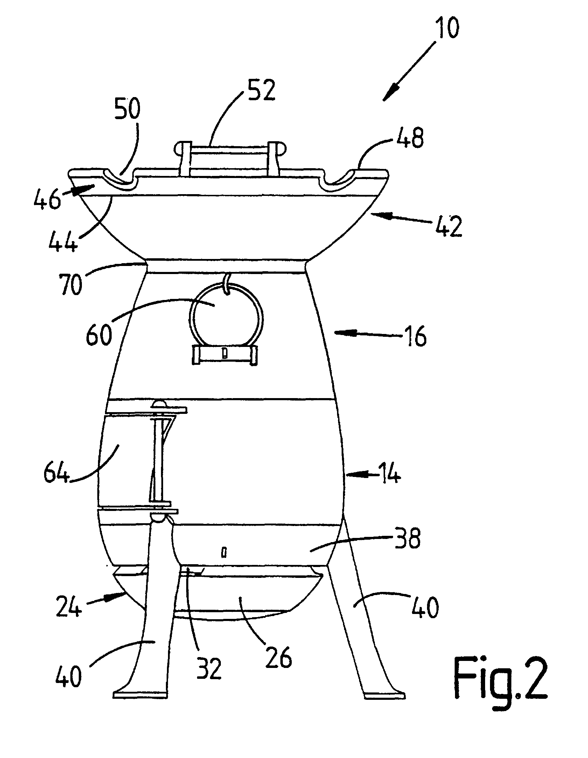

The apparatus 10 is further provided with air intake means generally indicated at 24. The air intake means 24 takes the form of an air valve for allowing an adjustable quantity of air to flow into the apparatus 10. The air intake means 24 is arranged adjacent the opposite side of the oven chamber 14 to the fuel chamber 16. In the illustrated embodiment, the air intake means 24 is provided by an end portion 26 of the body 12. The end portion 26 is adjustably coupled to the body 12 and is operable between a closed state (illustrated in Figure 1) in which the end portion 26 forms a substantially air-tight seal with the body 12, and a plurality of open states (one of which is illustrated in Figure 2) in which air can flow from the external environment into the apparatus 10.

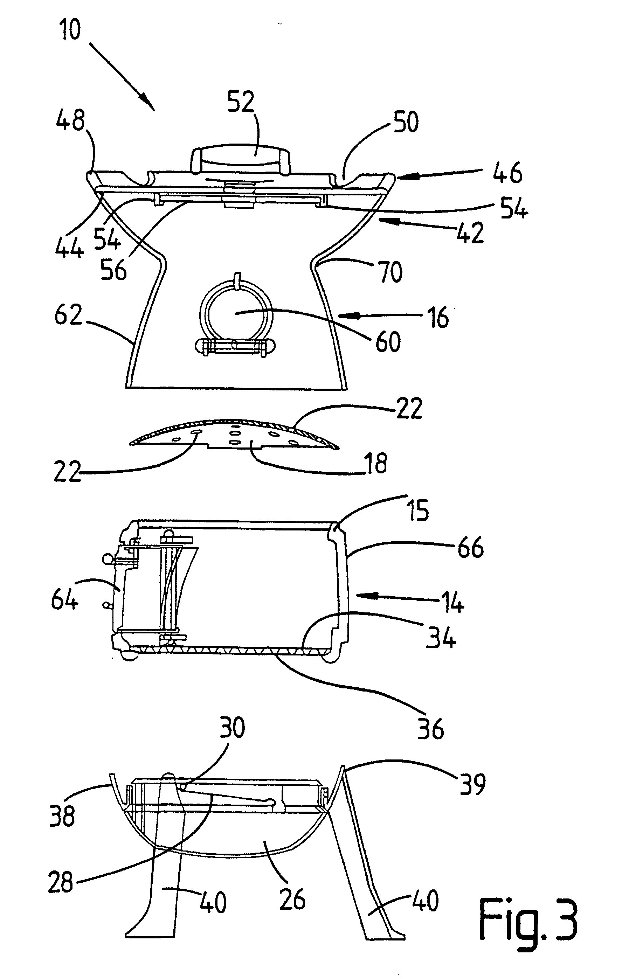

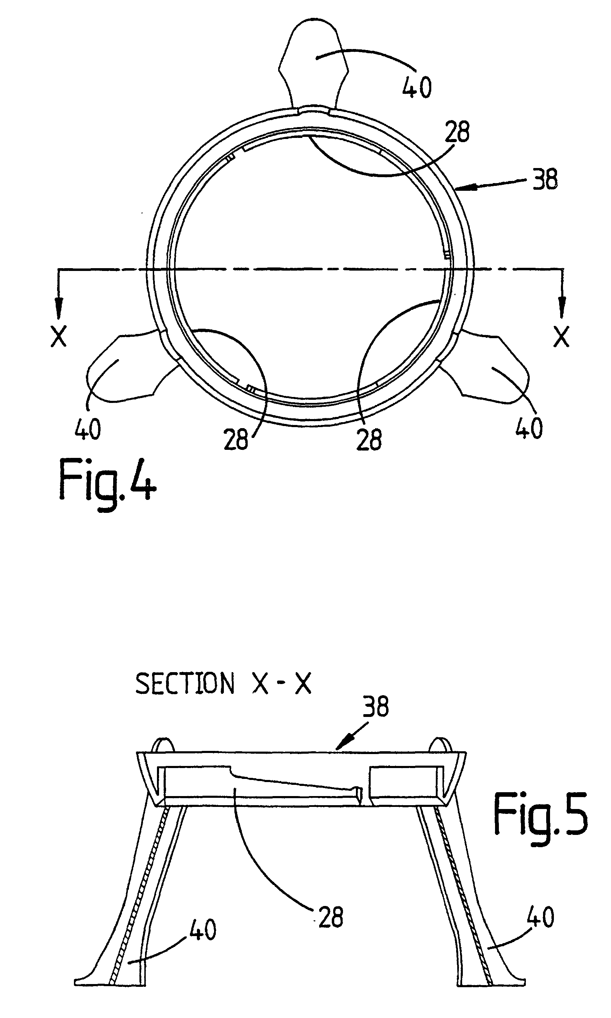

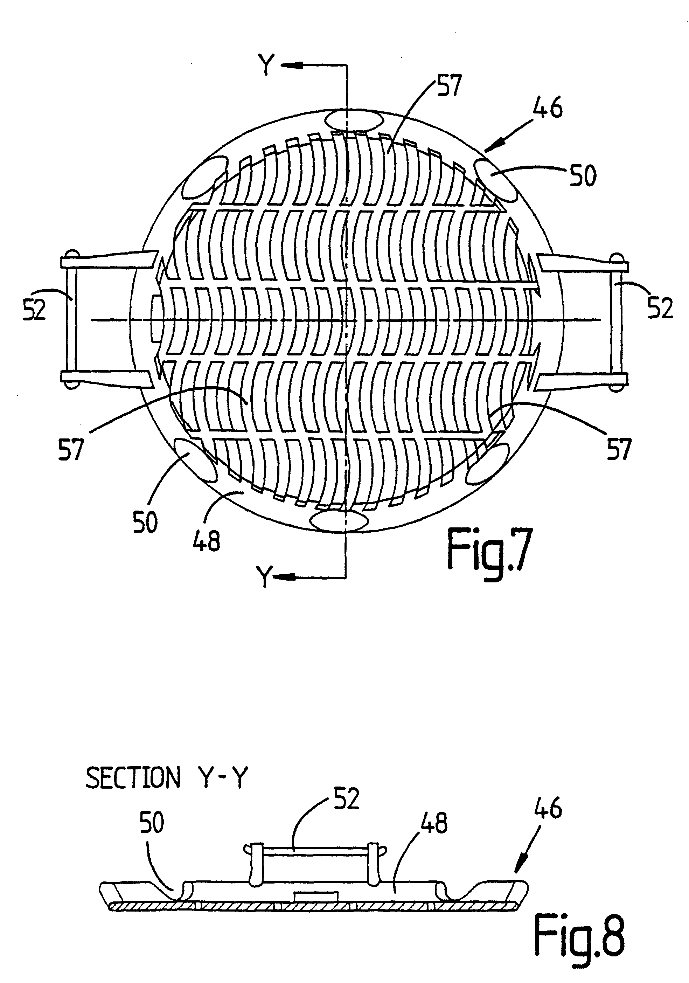

To this end, and as is best illustrated in Figures 3-6, the end portion 26 and a support frame 38 of the body 12 are provided with a plurality of cam members or cam profiles 28 and co-operating cam followers 30. In the present embodiment, three cam members 28 are provided on the support frame 38 while the corresponding three cam followers 30 are provided on the end portion 26, although more, or less, then three cam members 28/cam followers 30 may be employed. It will thus be apparent that relative rotation of the end portion 26 and the support frame 38 by a user (not shown) results in relative movement of the end portion 26 and the support frame 38 towards or away from one another in an axial direction depending on the direction of rotation.
Thus, the end portion 26 is operable between the open and closed states upon relative rotation of the end portion 26 and the support frame 38. It will be understood that the cam members 28 could alternatively be located on the end portion 26, and the cam followers 30 located on the support frame 28. It will also be readily apparent that the cam members 28 and cam followers 30 could be substituted with, for example, male and female portions of a screw thread as obvious equivalence, in order to achieve the relative movement between the support frame 38 and the end portion 26.

To facilitate ingress of air into the apparatus 10 when the end portion 26 is in an open state, the end portion 26 is provided with a plurality of recesses 32 around its periphery.

As second partition means in the form of a second partition plate 34 is provided between the oven chamber 14 and the end portion 26 within the body 12, formed of a material, preferably cast iron, capable of withstanding the temperatures experienced within the apparatus 10. The second plate 34 includes a plurality of mutually spaced-apart and substantially parallelly disposed bars 36. Thus, the second plate 34 provides a plurality of apertures between the oven chamber 14 and the end portion 26 through which air and other matter can flow or pass.

The support frame 38 of the body 12 carries a plurality of legs 40 for supporting the apparatus 10 during use. The support frame 38 raises the apparatus 10 to a height suitable for the use thereof, and in particular elevates the end portion 26 such as to provide sufficient clearance between the ground and the end portion 26 to allow the unobstructed flow of air from the surroundings into the apparatus 10. This elevation of the end portion 26 also allows the end portion 26 to be adjusted with ease, and to be removed from the support frame 38 as and when necessary.

The body 12 is further shaped to define a flared mouth portion 42. The arrangement is such that the fuel chamber 16 opens onto the external environment via the mouth portion 42.

The free or open end 44 of the mouth portion 42 is adapted to receive a main grill plate 46 such that the grill plate 46 substantially covers the open end 44 of the mouth portion 42. The mouth portion 42 has a rim portion 48 provided with a plurality of spaced-apart recesses 50 and a pair of oppositely disposed handles 52. The recesses 50 are provided such that, when the grill plate 46 is removed, a plurality of skewers (not shown) or the like may be placed across the free end 44 of the mouth portion 42, in order to increase the versatility of the apparatus 10.

A pair of closure members or doors 60 (only one visible in Figure 2) are provided in the walls 62 of the fuel chamber 16 for the stoking of fuel (not shown) within the fuel chamber 16. Oven doors 64 are provided in the walls 66 of the oven chamber 14 to allow access to the oven chamber 14.

It is preferred that the walls 66 of the oven chamber 14 are approximately twice as thick as the walls of the remainder of the body 12. In particular, it is preferred that the walls 66 are 12 mm thick and formed from cast iron. In order to allow the ease of manufacture of the apparatus 10, in addition to providing an additional number of advantageous features, the body 12 is, in the present embodiment, modular in form. However, the body 12 could, equally, be of unitary construction although an apparatus 10, constructed in such a manner, would not be as readily portable, as the present embodiment. Specifically, in the present embodiment, the fuel chamber 16, oven chamber 14, support frame 38 and end portion 26 may each be separately formed and are readily separated from each other. This therefore facilitates access to the internals of the apparatus 10, which may therefore be easily cleaned as and when this is necessary. The modular nature of the body 12 also allows the apparatus 10 to be transported or stored without occupying a large volume of space, and in particular, in terms of transport, divides the overall weight of the apparatus 10 into its constituent parts.

In constructing the apparatus 10 from these constituent parts, the end portion 26 is engaged within the support frame 38, and the oven chamber 14 mounted on the support frame 38 such that the wall 66 is engaged within a first circumfrential rim 39 of the support frame 38. The second partition means 34 are then located at the intersection of the oven chamber 14 and the support frame 38, at which stage the first partition means 18 is seated above the oven chamber 14 on a second circumfrential rim 15 thereof. The fuel chamber 16 is then mounted on the oven chamber 14 such that the wall 62 engages and circumscribes the second circumfrential rim 15. The fuel chamber 16, oven chamber 14 and support frame 38 are each shaped and dimensioned such that the body 12 has a substantially smooth exterior surface. No nuts, bolts or alternative fastening means are required for the construction of the apparatus 10, which further enhances the substantially smooth exterior surface.

In use, the apparatus 10 stands on the legs 40 such that the free end 44 of the mouth portion 42 faces upwardly. In this position, the fuel chamber 16 is located below the mouth portion 42; the oven chamber 14 is located below the fuel chamber 16 and the end portion 26/support frame 38 is located below the oven chamber 14, with the plate 18 located between the fuel chamber 16 and oven chamber 14, and the second plate 34 located between the oven chamber 14 and the support frame 38.

A user loads the fuel chamber 16 with fuel (not shown) such as charcoal, peat briquettes or similar fuel, through the mouth portion 42, and the fuel (not shown) rests in position on the plate 18 located at the intersection between the fuel chamber 16 and the oven chamber 14. The provision of the doors 60 in the wall 62 of the fuel chamber 16 allow the fuel (not shown) to be lit without difficulty, and supply a direct source of air to the fuel in order to expedite ignition thereof. When the fuel is ignited, the generated heat is directed upwards, by radiation, convection, and conduction along the walls 62, towards the mouth portion 42 and in particular towards the grill plate 46.

Simultaneously, heat is directed to the oven chamber 14 by conduction along the walls 66, and by radiation and convection through the apertures 22 and channels 19 in the plate 18. It will be appreciated that the solid fuel (not shown) located in the fuel chamber 16 will burn hottest at its centre, which will correspond substantially to the centre of the first plate 18. The temperature gradient, therefore, decreases from the centre of the plate 18, in an outwardly radial direction. The oven chamber 14 would have a similar temperature gradient, which could result in the uneven cooking of any food (not shown) located therein. The convex nature of the first plate 18 ensures that the hottest point of the solid fuel (not shown) is elevated above the oven chamber 14, relative to the remainder of the fuel (not shown), in order to give a substantially even temperature distribution across the entire width of the oven chamber 14. It is believed that, were the plate 18 planar in profile, the oven chamber 14 would be considerably hotter at its centre, preventing the even and efficient cooking therein.

As the solid fuel (not shown) burns, a quantity of consumed fuel or ash (not shown) is produced. However, the convex nature of the first plate 18 causes any ash (not shown) produced within the fuel chamber 16 to gravitate outwardly toward the channels 19 of the plate 18. Once the ash (not shown) reaches the channels 19, it drops, under gravity, through the oven chamber 14 adjacent the walls 66, thereby substantially avoiding any food (not shown) which may be present in the oven chamber 14. It is nonetheless preferable to cover any food located in the oven chamber 14 with, for example, metal foil (not shown) or by using a lidded ovenproof dish (not shown). The ash falls further into, and collects in, the end portion 26 via the second plate 34. The end portion 26 thus serves as an ash receptacle. It is preferable that the cam members 28 and cam followers 30 are arranged to allow the end portion 26 to be detached from the body 12 so that any collected ash may be disposed of. This continuous removal of ash and spent fuel (not shown) ensures that maximum fuel efficiency is obtained; while also allowing even combustion of the fuel (not shown) across the entire area of the first plate 18.

The air intake means 24 may be adjusted between the closed state and an open state to prevent or allow air to enter the apparatus 10 from beneath the oven chamber 14. Air which enters through the air intake means 24 passes through the oven chamber 14 via the second and first apertured plates 34, 18 to fan the ignited fuel. Thus, the air intake means 24, and specifically the end portion 26, is finely adjustable to control the volume of air entering the apparatus 10, thereby controlling the temperature within the oven chamber 14 and at the mouth portion 42 according to the user's requirements.

It is found that the arrangement whereby apertures 22 and in particular the channels 19 are provided between the fuel chamber 16 and the oven chamber 14 and whereby air is able to flow through the oven chamber 14 to fan the ignited fuel, gives rise to unexpectedly high temperatures in the oven chamber 14 and allows a high degree of temperature control in the oven chamber 14 and at the mouth portion 42. In comparative tests between a comparative apparatus 10 having a solid, non-apertured plate 18 (not shown) disposed between the fuel chamber 16 and the oven chamber 14 and the apparatus 10 as illustrated in the present embodiment, it was found that the average temperatures obtained in the oven chamber 14 were very substantially increased when using the apertured plate 18.

This is attributable to the increase in radiated heat through the apertures 22 and in particular the channels 19 into the oven chamber 14, and the increased temperature of combustion of the fuel (not shown) due to the induction of oxygen through the apertures 22 and the channels 19, via the end portion 26 and the second plate 34. The number of apertures 22 and channels 19 provided in the plate 18 may be varied to adjust the temperature achieved within the oven chamber 14. In the present embodiment of the invention, the temperatures obtainable within the oven chamber 14 were between 200°C and 300°C, the temperature adjustable within this range by means of the end portion 26. In relation to the fuel efficiency, in the present embodiment of the invention 2.5 kilos of solid fuel (not shown) will produce approximately 5 kilowatts of heat for approximately 2 hours.

Food to be baked or roasted (not shown) is set on the second plate 34 in the oven chamber 14 and food to be grill (not shown) is set on the main grill plate 46 in the mouth portion 42. Food placed on the main grill plate 46 is cooked in a manner similar to that of a conventional barbecue unit.

It is preferred that the body portion 12 has a relatively narrow neck 70 between the flared mouth portion 42 and the fuel chamber 16, thereby channelling the heat produced by the fuel (not shown) within the fuel chamber 16 towards the centre of the grill plate 46, over which food may efficiently be cooked. It will also be apparent that this creates a relatively cool region around the periphery of the main grill plate 46, whereon food may be placed when the cooking thereof is nearing completion, in order to allow the food to continue cooking without being subject to the relatively high temperatures present at the centre of the grill plate 46..

Advantageously, when the main grill plate 46 removed, the mouth portion 42 is able to receive a conventional cooking utensil such as a wok (not shown). The main grill plate 46 is also formed from three seperable sections, to allow the easy cleaning of the grill plate 46, in for example, a dishwasher or the like.

The apparatus 10, although primarily intended for use in cooking, may be utilised as a stand alone heating apparatus. The apparatus 10, when used in this capacity, is operated as standard using solid fuel (not shown), and is suited to heating the likes of holiday homes or cottages. The doors 64 may be left open in order to maximise the heat transfer between the apparatus 10 and the surroundings, or kept closed for a shower, more sustained heat output.

## Claims

1. An apparatus (10) comprising an oven chamber (14) for roasting or baking food therein; a fuel chamber (16) located, in use, above the oven chamber and defining a mouth portion (42) disposed remote from the oven chamber (14), the mouth portion being adapted for grilling food thereon; and a first partition means between the oven chamber (14) and the fuel chamber (16), the first partition means (18) being a plate having at least one aperture to allow air to flow between the fuel chamber (16) and the oven chamber (14).

2. The apparatus as claimed in claim 1 wherein said plate is substantially convex in shape.

3. The apparatus as claimed in Claim 1 or Claim 2 wherein the plate has a plurality of aperture provided therein.

4. An apparatus as claimed in any preceding claim, wherein the plate has at least one circumferentially disposed channel formed therein.

5. An apparatus as claimed in any preceding claim having an air intake means, the oven chamber being arranged between the air intake means and the first partition means.

6. An apparatus as claimed in any preceding claim, wherein the apparatus has an end portion oppositely disposed, in use, under the oven chamber, the end portion being adjustably coupled to a support frame and operable between a closed state, in which the end portion forms a substantially air-tight seal with the support frame, and at least one open state in which air from the surrounding environment is able to flow into the apparatus.

7. An apparatus as claimed in any preceding claim wherein a second partition means is provided between the oven chamber and the end portion, the second partition means being oppositely disposed on the oven chamber with respect to the first partition means and comprises at least one aperture such that, when the end portion is in the at least one open state, air is able to flow through the oven chamber via the first and second partition means.

8. An apparatus as claimed in Claim 6 or 7 wherein the end portion is coupled to the support frame by via at least one cam member and corresponding cam follower which enable axial movement of the end portion with respect to the support frame upon relative rotation of the end portion and the support frame.

9. A modular apparatus (10) comprising an oven chamber (14) for roasting or baking food therein; a fuel chamber (16) shaped and dimensioned to be located, in use, above the oven chamber (14) and defining a mouth portion disposed remote from the oven chamber, the mouth portion (42) being adopted for grilling food thereon; and a first partition means (18) shaped and dimensioned to be located, in use, between the oven chamber (14) and the fuel chamber (16), the first partition means being a plate (18) having at least one aperture to allow air to flow between the fuel chamber and he oven chamber.

10. The modular apparatus as claimed in claim 9 wherein said plate is substantially convex in shape.

## Patentansprüche

1. Ein Apparat (10), bestehend aus einer Ofenkammer (14) fuer Brat- und Backanwendungen; einer separaten Brennmaterialkammer (16), die, falls verwendet, oberhalb der Ofenkammer (14) angebracht ist und in einem trichterfoermigen Abschnitt (42) endet; einem trichterfoermigen Abschnitt fuer Backanwendungen und einer Trennscheibe (18) zwischen der Ofen- (14) und Brennmaterialkammer (16), die mindestens eine Oeffnung aufweist und somit die Luftzirkulation zwischen Brennmaterial- (16) und Ofenkammer (14) ermoeglicht.

2. Die im Patentanspruch 1 beschriebenen Apparat enthaltene Trennscheibe hat ausdruecklich eine convexe Form aufzuweisen.

3. Die in den Patentanspruechen 1 und 2 genanntem Apparat enthaltene Trennscheibe hat mindestens eine Oeffnung aufzuweisen.

4. Die in den obigen Patentanspruechen genanntem Apparat enthaltene Trennscheibe weist mindestens einen periphaer gelegen Ausschnitt, welcher einen Kanal formt, auf

5. Der in den obigen Patentanspruechen genannte Apparat enthaelt eine Vorrichtung zur Luftzufuhr, welche, unterhalb der o.g. Ofenkammer liegend, mit o.g. Trennscheibe die Ofenkammer umschliesst.

6. Der in den obigen Patentanspruechen genannte Apparat enthaelt ein Endstueck, welches, unter der o.g. Ofenkammer liegend, drehbar an einem Tragerahmen befestigt ist, bei geschlossem Zustand einen luftdichten Verschluss mit dem Tragerahmen bildet und bei mindestens einem geoeffhteten Zustand eine Zufuhr der umliegenden Luft ermoeglicht.

7. Der in den obigen Patentanspruechen genannte Apparat enthaelt eine zweite Trennvorrichtung, die, zwischen der o.g. Ofenkammer und dem o.g. Endstueck liegend, bei einem geoeffneten Zustand des Endstuecks eine Luftzirkulation durch mindestens eine in dieser enthaltenen Oeffnungen sowie durch die o.g. Ofenkammer als auch die o.g. Trennscheibe ermoeglicht.

8. Das an den in den Patenanspruechen 6 und 7 genannten Apparat befestigte Endstueck ist mittels mindestens einer Nocke und ensprechendem Gegenstueck beweglich am o.g. Tragerahmen befestigt, um somit eine axiale Drehbewegung mit vertikal verlaufender Achse zu ermoeglichen.

9. Ein modularer Apparat (10), bestehend aus einer Ofenkammer (14) fuer Brat- und Backanwendungen; einer separaten Brennmaterialkammer (16), die, falls verwendet, von bestimmter Form und Groesse, oberhalb der Ofenkammer (14) angebracht wird und in einem trichterfoermigen Abschnitt (42) endet; einem trichterfoermigen Abschnitt fuer Backanwendungen und einer Trennscheibe (18) zwischen der Ofen- (14) und Brennmaterialkammer (16), die, falls verwendet, von bestimmter Form und Groesse, mindestens eine Oeffnung aufweist und somit die Luftzirkulation zwischen Brennmaterial- (16) und Ofenkammer (14) ermoeglicht.

10. Die in dem im Patentanspruch 9 beschriebenen modularen Apparat enthaltene Trennscheibe hat audruecklich eine konvexe Form aufzuweisen.

## Revendications

1. un appareil comprenant une chambre de four pour rôtir ou cuire la nourriture là dedans, une chambre de carburant et définir une portion de bouche a disposé éloigné de la chambre de four, la portion de bouche étant adaptée pour griller de nourriture sur ce, et une chambre de carburant, les premiers moyens de cloison entre la chambre de four et la chambre de carburant, les premiers moyens de cloison sont une plaque substantiellement convexe ayant au moins un apperature pour permettre de l'à l'air pour couler entre leAlimenter la chambre et la chambre de four.

2. l'appareil comme réclamé dans la réclamation 1 plaque en quoi dite est substantiellement convexe dans la forme.

3. L'appareil comme réclamé dans la réclamation 1 en quoi la plaque a une pluralité d'ouverture fournie là dedans.

4. un appareil comme réclamé dans la réclamation précédant, en quoi la plaque a au moins une chaîne circonférentielment disposée a formé là dedans.

5. Un appareil comme réclamé dans la réclamation précédant ayant un moyens de prise d'air, la chambre de four étant arrangée entre les moyens de prise d'air et les premiers moyens de cloison.

6. un appareil comme réclamé dans n'importe quel précéder réclame en quoi l'appareil a une portion de fin opposément disposé, dans l'usage, sous la chambre de four, le endportion étant ajustablement couplé à un cadre de soutien et opérable entre un état fermé, dans lequel la portion de fin forme un aère substantiellement le cachet tendu avec le cadre de thesupport, et au moins un ouvert déclarer dans lequel aérer de l'environnement environnant peut couler dans leAppareil.

7. un appareil comme réclamé dans n'importe quel précéder réclame en quoi un deuxièmes moyens de cloison sont fournis entre la chambre de four et la portion de fin, les deuxièmes moyens de cloison étant opposément disposés sur la chambre de four par rapport aux premiers moyens de cloison et comprennent au moins une ouverture tel cela, quand la portion de fin est dans l'au moins un ouvert déclare, l'air peut couler par la chambre de four viaLa première et deuxième cloison signifie.

8. Un appareil comme réclamé dans la réclamation 5 ou 6 en quoi la portion de fin est couplée au cadre de soutien par via au moins un membre de fao et le partisan de fao correspondant qui rendent capable le mouvement axial de la portion de fin par rapport au cadre de soutien sur la rotation relative de la portion de fin et le cadre de soutien.

9. un appareil modulaire comprenant une chambre de four pour rôtir ou cuire la nourriture là dedans, un carburant en forme de chambre et dimensioned être localisé, dans l'usage, au-dessus de la chambre de four et au-dessus de définir une portion de bouche disposée éloignée de la chambre de four, la portion de bouche étant adoptée pour griller de nourriture sur ce, et une première cloison en forme de moyens et dimensioned être localisé, dans l'usage, entre la chambre de four et la chambre de carburant, le premièrement Les moyens sont une plaque substantiellement convexe ayant au moins une ouverture pour permettre de l'à l'air pour couler entre la chambre de carburant et la chambre de four.

10. l'appareil modulaire comme réclamé dans la réclamation 9 plaque en quoi dite est substantiellement convexe dans la forme.
